# EUROPEAN PATENT SPECIFICATION

(11) **EP 3 627 790 B1**
(45) Date of publication and mention of the grant of the patent: **22.03.2023**
(21) Application number: 18801461.7
(22) Date of filing: 16.05.2018
(51) Int. Cl.: H04W 4/16, H04M 3/42, H04M 3/54, H04L 65/1063, H04L 65/1046, H04L 65/1016, H04L 65/1045, H04M 3/436, H04L 67/02

(54) **CALL SCENARIO MODE ADJUSTMENT METHOD, APPLICATION SERVER AND STORAGE MEDIUM**
VERFAHREN ZUR EINSTELLUNG EINES RUFSZENARIOMODUS, ANWENDUNGSSERVER UND SPEICHERMEDIUM
PROCÉDÉ DE RÉGLAGE DE MODE DE SCÉNARIO D'APPEL, SERVEUR D'APPLICATION ET SUPPORT D'INFORMATIONS

(30) Priority: 16.05.2017 CN 201710342538
(43) Date of publication of application: 25.03.2020
(73) Proprietor: ZTE Corporation, Shenzhen, Guangdong 518057 (CN)
(72) Inventor: QU, Tianxi, Shenzhen Guangdong 518057 (CN); CHEN, Xing, Shenzhen Guangdong 518057 (CN); QIAN, Chen, Shenzhen Guangdong 518057 (CN)
(74) Representative: Canzler & Bergmeier Patentanwälte Partnerschaft mbB
(86) International application number: PCT/CN2018/087105
(87) International publication number: WO 2018/210268

(56) References cited:
- CN-A- 1 543 615
- CN-A- 101 494 700
- CN-A- 104 079 609
- US-A1- 2006 031 326
- US-A1- 2009 196 410
- US-A1- 2010 190 474

## Description

### TECHNICAL FIELD

The present disclosure relates to the field of communications technologies, and in particular, to a call scenario mode adjustment method, an application server, and a storage medium.

### BACKGROUND

An IP Multimedia Subsystem (IMS) network is an open system based on IP bearers and provides users with various multimedia services. An Application Server (AS) is an application layer device located on the uppermost layer in the IMS network, and may provide service capabilities, such as call control, status reporting, and ticket generation. However, with continuous development of intelligent communication technology, the AS can configure customized call scenario modes, so that the call scenario modes of users are diversified. However, at present, the AS can only make a call according to a configured call scenario mode, and cannot flexibly adjust the call scenario mode. There is a need for providing a method that is capable of adaptively adjusting call scenario mode.

The documents US 2010/190474 A1, US 2006/031326 A1, US 2009/196410 A1, CN 104 079 609 A, CN 101 494 700 A and CN 1 543 615 A represent relevant prior art.

### SUMMARY

According to an aspect of the present disclosure, there is provided a call scenario mode adjustment method according to appended independent claim 1.

According to another aspect of the present disclosure, there is provided an application server according to appended independent claim 5.

According to yet another aspect of the present disclosure, there is provided a computer readable storage medium storing a call scenario mode adjustment program thereon according to appended independent claim 9.

The above description is merely an overview of technical solutions of the present disclosure, so that the technical means of the present disclosure can be clearly understood, and the embodiments of the present disclosure will be described in detail below in order to make the above and other objects, features and advantages of the present disclosure more apparent.

### BRIEF DESCRIPTION OF THE DRAWINGS

In order to more clearly illustrate the embodiments of the present disclosure, the embodiments of the present disclosure will be described in detail below with reference to the accompanying drawings. It is obvious that the figures in the following description only show some embodiments of the present disclosure, and that other embodiments according to the present disclosure can be obtained by those skilled in the art without inventive efforts. In the drawings:
Fig. 1 is a flowchart of a call scenario mode adjustment method according to an embodiment of the present disclosure;
Fig. 2 is a topology diagram of network elements according to an embodiment of the present disclosure;
Fig. 3 is a flowchart of a call scenario mode adjustment method according to an embodiment of the present disclosure;
Fig. 4 is a flowchart of data synchronization between a mailbox server and an application server according to an embodiment of the present disclosure; and
Fig. 5 is a block diagram illustrating a structure of an application server according to an embodiment of the present disclosure.

### DETAILED DESCRIPTION

The embodiments of the present disclosure will be described in further detail below with reference to the accompanying drawings. It should be understood that the embodiments described herein are merely illustrative of the present disclosure and do not limit the scope of the present disclosure.

In working and life, data of user calendars such as mailbox calendar and mobile phone calendar, schedule reminding and the like plays a great role. Taking a mailbox calendar as an example, in mainstream mailboxes such as OutLook, Google, Notes and the like, user-specific schedule information (event types such as reminder, meeting, training, business trip, vacation, busy, idle and the like) and flexible setting of various time types such as daily, weekly, specific day and the like may be created based on the calendar, so that great convenience is brought to the working and life of people. Therefore, the call scenario mode adjustment method provided by the present disclosure may adaptively adjust a required call scenario mode according to the calendar information of the user, and provides convenience for life of people.

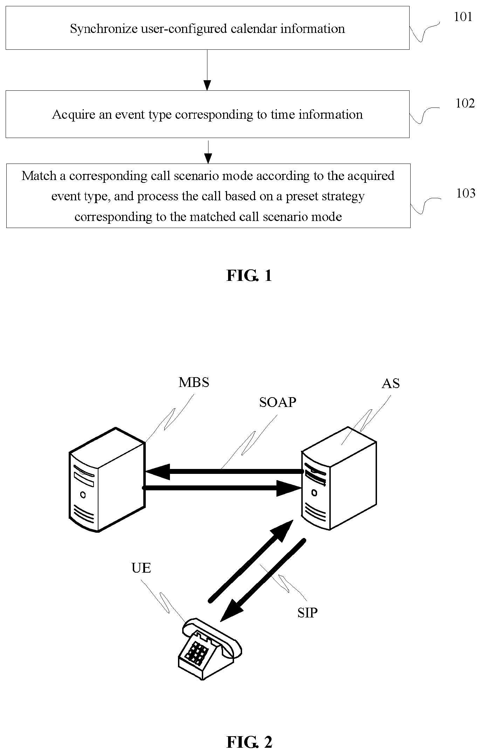

Fig. 1 is a flowchart of a call scenario mode adjustment method according to an embodiment of the present disclosure.

As shown in Fig. 1, the call scenario mode adjustment method according to an embodiment of the present disclosure may include steps 101 to 103.

In step 101, user-configured calendar information is synchronized, wherein the calendar information includes an event type and time information of event occurrence.

The calendar information may include the event type and time information of the event occurrence. The event type may include, but are not limited to, types of reminder, meeting, training, business trip, vacation, busy, and idle. The time information of the event occurrence may include a time type (e.g., weekly, daily, specific day, etc.) and a time period of the event occurrence.

When configuring the calendar information, the user may configure the calendar information in the mailbox or on a mobile terminal or other devices, which is not specifically limited herein. The user does not allow events with the same time type and the same time period when making the setting.

When the calendar information configured by the user is synchronized, an automatic synchronization manner or a manual synchronization manner may be adopted. In the automatic synchronization, the synchronization may be performed according to a preset time interval, or may be performed when an update or change of the calendar information is detected. When the manual synchronization is performed, touch operation of the user is mainly detected, and when a touch key of synchronization is detected to be touched, a synchronization processing is carried out.

In step 102, when a user-related call occurs within a time set by the time information, the event type corresponding to the time information is acquired.

In step 102, when there is a user-related call, it is determined whether the time of the call is within a time period set by the time information in which a certain event occurs in the calendar information. If the time of the call is within the time period set by the time information of the certain event occurrence, the event type of the event is acquired.

The time information may include the time type and the time period in which the event occurs, and acquiring the event type corresponding to the time information (i.e., step 102) may include: when the time period contains a plurality of events, sequencing priorities of the plurality of events according to the time type; and selecting the event type of the event having the highest priority as the event type corresponding to the time information.

Since a same time may correspond to a plurality of pieces of calendar information, it is necessary to select an event having a high priority level. The priority of the events may be sequenced by using the time type, e.g., a event having the time type of specific day may have a higher priority than a event having the time type of weekly, and the event having the time type of weekly may have a higher priority than a event having the time type of daily. Selecting the event type of the event having the highest priority level as the event type corresponding to the time information, and performing subsequent processing according to the event type.

In step 103, a corresponding call scenario mode is matched according to the acquired event type, and the call is processed based on a preset strategy corresponding to the matched call scenario mode.

In step 103, when the corresponding call scenario mode is matched according to the event type, since a mapping relationship between the event type and the call scenario mode is stored in an application server (AS) in advance, the call scenario mode corresponding to the event type may be directly matched according to the mapping relationship.

The call scenario mode in this disclosure is for the AS and is different from a scenario mode of a mobile terminal. The scenario mode of the mobile terminal mainly refers to a local incoming call mode, such as ring tone or mute. The call scenario mode adopted by the present disclosure refers to a processing strategy of the AS for outgoing calls and incoming calls. The processing strategy of the AS for the outgoing and the incoming calls may be different in different call scenario modes.

When the call is processed based on the preset strategy corresponding to the call scenario mode, if the call is an outgoing call, the call is carried out based on a number display strategy corresponding to the call scenario mode; if the call is an incoming call, the call is carried out based on a ringing strategy corresponding to the call scenario mode.

In the present disclosure, the number display strategy refers to a display mode for a calling number, and the ring strategy refers to a routing mode for a call. For example, three call scenario modes, i.e., call scenario mode 1 to call scenario mode 3, are stored in the AS. Under the call scenario mode 1, when the user calls out, a real number of the user may be displayed; under the call scenario mode 2, when the user calls out, anonymous display may be performed; and under the call scenario mode 3, when the user calls out, an intra-group short number or a switchboard number, etc. may be displayed. In addition, under the call scenario mode 1, when the user calls in, the user may call a route to the number of the user; under the call scenario mode 2, when the user calls in, the user is unconditionally or conditionally routed to other numbers; under the call scenario mode 3, when the user calls in, a plurality of numbers are co-shaken or sequentially shaken, and the like.

The technical contents of the present disclosure will be described in detail with reference to the drawings and the specific embodiments.

In this embodiment, a mailbox calendar is taken as an example for description. The AS requests calendar information from a mailbox server of the user through an Application Programming Interface (API) opened by a server of the mailbox (hereinafter, simply referred to as mailbox server) by using a protocol such as Simple Object Access Protocol (SOAP), and synchronizes the acquired calendar information of the user into a database of the AS so that the calendar information may be used for performing adaptation when the user calling. The event type of the calendar is acquired according to the time period of the calendar corresponding to the calling time, and a call scenario mode is acquired according to a mapping relation between the event type and the call scenario mode, so as to achieve an effect of executing different number display strategies and/or ringing strategies under different scenario modes.

Fig. 2 is a topology diagram of network elements according to an embodiment of the disclosure, the network elements include a User Equipment (UE), an Application Server (AS), and a Mailbox Server (MBS). The UE is a device for initiating and receiving a call and performing other call operations for a user, such as a C-network or G-network mobile phone, a PSTN terminal, an IMS terminal, and the like. The MBS is a server or a device providing functions of a calendar, a contact person and the like for a user. The AS and the UE are intercommunicated through a core network by using a Session Initiation Protocol (SIP), and protocols such as SOAP are used between the AS and the MBS. The AS sends SOAP messages to request calendar information of a user through APIs provided by the MBS.

The following description will be made specifically by taking a mailbox server Exchange corresponding to the OutLook mailbox of Microsoft corporation as an example.

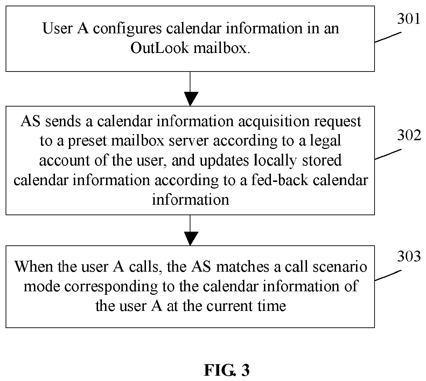

Fig. 3 is a flowchart of a call scenario mode adjustment method according to an embodiment of the present disclosure.

As shown in Fig. 3, the call scenario mode adjustment method according to an embodiment of the present disclosure may include steps 301 to 303.

In step 301, a user A configures calendar information in the OutLook mailbox.

Calendar information may be stored on the mailbox server Exchange and contain information in the AS, such as the mailbox username of the user.

In step 302, when the AS is performing synchronization, the AS sends a calendar information acquisition request to a preset mailbox server according to a legal account of the user, and updates locally stored calendar information according to a fed-back calendar information after receiving the calendar information fed back by the mailbox server.

Account information of the user and address information of the mailbox server are stored in the AS in advance. When synchronization is required, the calendar information acquisition request based on the SOAP protocol is transmitted to the mailbox server Exchange through APIs provided by the mailbox server Exchange. If the AS is a Virtual Private Branch Exchange (VPBX), the mailbox server addresses of users under a same group may be the same and the mailbox server address information is stored at the group level.

Before sending the calendar information acquisition request based on the SOAP protocol to the mailbox server Exchange, it is possible to request the mailbox server Exchange for format information of an acquisition service. And after receiving the format information fed back by the mailbox server Exchange, sending the calendar information acquisition request to the mailbox server Exchange based on the format information.

After the AS receives a response to the SOAP request returned by the mailbox server Exchange, the AS acquires an event type and time information related to the calendar information and writes the acquired calendar information into a database of the AS to replace a previous calendar information of the corresponding user A. If the response to the calendar request is failed, the calendar information in the database of the AS is not updated.

In step 303, when the user A calls, the AS matches a call scenario mode corresponding to the calendar information of the user A at the current time. If the call of the user A is an outgoing call, a number display strategy corresponding to the call scenario mode is adopted, and if the call of the user A is an incoming call, a ringing strategy corresponding to the call scenario mode is adopted.

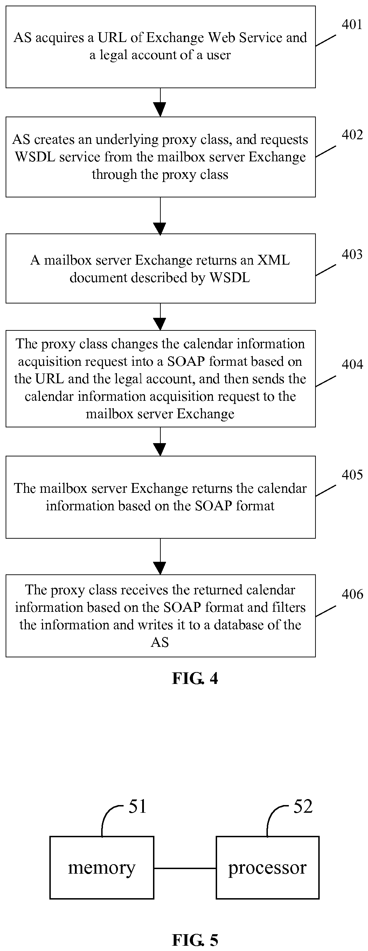

Fig. 4 is a flowchart of data synchronization between a mailbox server and an application server according to an embodiment of the present disclosure. A process of synchronization between the AS and mailbox server Exchange is described in detail below.

The Microsoft's official Exchange Server Developer Center provides Microsoft Exchange Web Services Managed APIs that can be used to interact with the mailbox server Exchange. Web services are employed to enable data synchronization of calendar information between the mailbox server Exchange and the AS. Exchange Web Service uses an opened Extensible Markup Language (XML) standard to describe and configure applications, and message interaction interfaces of the XML standard are opened and fixed, for facilitating data filtering. The mailbox server Exchange publics Web Services Definition Language (WSDL) services, and the AS may call the server through the opened APIs to acquire the required calendar information data.

As shown in Fig. 4, the calendar information synchronization between the AS and mailbox server Exchange based on the Web Service may include steps 401 to 406.

In step 401, the AS acquires a Uniform Resource Locator (URL) of Exchange Web Service and a legal account (including a user name and a password) of a user.

In step 402, the AS creates an underlying proxy class, and requests WSDL service from the mailbox server Exchange through the proxy class according to the URL and the legal account.

In step 403, after receiving the request provided by the proxy class, the mailbox server Exchange returns an XML document described by WSDL. Here, the XML document is used to enable the AS to determine a protocol of request transmission.

In step 404, the proxy class created by the AS changes the calendar information acquisition request into a SOAP format based on the URL and the legal account, and then sends the calendar information acquisition request to the mailbox server Exchange through HTTP protocol.

In step 405, the mailbox server Exchange responds to the request by returning the calendar information based on the SOAP format.

In step 406, the proxy class created by the AS receives the returned calendar information based on the SOAP format and filters the information and writes it to a database of the AS. Here, the filtering may include processing information that is invalid in the calendar information (e.g., information that an event has occurred).

According to the application server disclosed by the present disclosure, number display strategies and ringing strategies are adaptively adjusted according to the call scenario mode of the user based on the event type and the time information included in the calendar information of the user, so that the functions of the user calendar and the call scenario mode are more flexibly played. With development of an internet of things and the 4G and 5G networks and technologies, convergence of Circuit Switched (CS) network and Packet Switched (PS) network, and convergence between various application systems, the call scenario mode adjustment method according to the present disclosure has wide development and usage space.

Fig. 5 is a block diagram illustrating a structure of an application server according to an embodiment of the present disclosure.

As shown in Fig. 5, an application server according to an embodiment of the present disclosure may include a processor 52 and a memory 51 storing instructions executable by the processor 52. The processor 52 may be a general purpose processor such as a Central Processing Unit (CPU), a Digital Signal Processor (DSP), an Application Specific Integrated Circuit (ASIC), etc., or may be configured as one or more integrated circuits implementing embodiments of the present disclosure. The memory 51 is used to store program codes and to transmit the program codes to the processor 52. The Memory 51 may include volatile memory such as Random Access Memory (RAM). The memory 51 may also include non-volatile memory, such as Read-only Memory (ROM), flash memory, Hard Disk Drive (HDD), or Solid-state Drive (SSD). The memory 51 may also include a combination of the above mentioned kinds of memory.

The memory 51 stores therein a computer-executable call scenario mode adjustment program, and the processor 52 is configured to execute the call scenario mode adjustment program to execute the steps of: synchronizing user-configured calendar information, wherein the calendar information includes an event type and time information of event occurrence; in response to a user-related call occurs within a time set by the time information, acquiring the event type corresponding to the time information; and matching a corresponding call scenario mode according to the acquired event type, and processing the call based on a preset strategy corresponding to the matched call scenario mode.

The calendar information may be located in a mailbox and accordingly, the processor 52 is configured to execute the call scenario mode adjustment program to perform the steps of: sending a calendar information acquisition request to a server of the mailbox according to a legal account of the user; and updating a locally stored calendar information according to a fed-back calendar information after receiving the calendar information fed back by the server of the mailbox.

According to an embodiment of the present disclosure, the processor 52 is further configured to execute the call scenario mode adjustment program to perform the steps of: requesting format information for acquiring service to the server of the mailbox through a legal account; and after receiving the format information fed back by the server of the mailbox, sending the calendar information acquisition request to the server of the mailbox based on the format information.

The time information may include a time type and a time period in which the event occurs, and the processor 52 is further configured to execute the call scenario mode adjustment program to perform the steps of: in a case where the time period contains a plurality of events, sequencing priorities of the plurality of events according to the time type; and selecting the event type of the event having the highest priority as the event type corresponding to the time information.

According to an embodiment of the present disclosure, the processor 52 is further configured to execute the call scenario mode adjustment program to perform the steps of: in a case where the call is an outgoing call, carrying out the call based on a number display strategy corresponding to the call scenario mode; and in a case where the call is an incoming call, carrying out the call based on a ringing strategy corresponding to the call scenario mode.

Embodiments of the present disclosure also provide a computer-readable storage medium having one or more programs stored thereon. The computer-readable storage medium may include volatile memory (e.g., random access memory) and non-volatile memory (e.g., read-only memory, flash memory, hard disk, or solid state disk). The memory may also include a combination of the above mentioned kinds of memory. When the one or more programs stored in the computer-readable storage medium are executed by one or more processors, the call scenario mode adjustment method according to the embodiments of the present disclosure may be implemented.

Those of ordinary skill in the art will appreciate that all or part of the processes of implementing the methods provided by the embodiments described above may be performed by associated hardware executing computer program instructions, which may be stored in a computer-readable storage medium, and that the programs. When the computer program instructions executed, the processes of the methods provided by the embodiments of the present disclosure may be implemented.

Although the present application has been described by way of example, those skilled in the art will recognize that there are numerous modifications and variations of the present application without departing from the scope of the present disclosure. Thus, provided that such modifications and variations of the present disclosure are within the scope of the claims of the present disclosure and their equivalents, the present disclosure is also intended to encompass such modifications and variations.

## Claims

1. A call scenario mode adjustment method, comprising:
synchronizing (101) user-configured calendar information, wherein the calendar information comprises an event type and time information of event occurrence;
in response to a user-related call occurring within a time set by the time information, acquiring (102) the event type corresponding to the time information; and
matching (103) a corresponding call scenario mode according to the acquired event type, and processing the call based on a preset strategy corresponding to the matched call scenario mode;
wherein the time information comprises a time type and a time period during which the event occurs, and acquiring the event type corresponding to the time information comprises:
in a case where the time period contains a plurality of events, sequencing priorities of the plurality of events according to the time type; and
selecting an event type of an event having a highest priority as the event type corresponding to the time information.

2. The method of claim 1, wherein the calendar information is located in a mailbox and the step of synchronizing (101) the user-configured calendar information comprises:
sending a calendar information acquisition request to a server of the mailbox according to a legal account of the user; and
after receiving the calendar information fed back by the server of the mailbox, updating a locally stored calendar information according to the fed-back calendar information.

3. The method of claim 2, wherein prior to the step of sending the calendar information acquisition request to the server of the mailbox according to the legal account of the user, the method further comprises:
requesting format information for acquiring service to the server of the mailbox; and
after receiving the format information fed back by the server of the mailbox, sending the calendar information acquisition request to the server of the mailbox based on the format information.

4. The method of claim 1, wherein the step of processing the call based on the preset strategy corresponding to the matched call scenario mode comprises:
in a case where the call is an outgoing call, carrying out the call based on a number display strategy corresponding to the matched call scenario mode; and
in a case where the call is an incoming call, carrying out the call based on a ringing strategy corresponding to the matched call scenario mode.

5. An application server, comprising a memory (51) and a processor (52), wherein
the memory (51) stores a computer-executable call scenario mode adjustment program, and the processor (52) is configured to execute the call scenario mode adjustment program to execute the steps of:
synchronizing user-configured calendar information, wherein the calendar information comprises an event type and time information of event occurrence;
in response to a user-related call occurring within a time set by the time information, acquiring the event type corresponding to the time information; and
matching a corresponding call scenario mode according to the acquired event type, and processing the call based on a preset strategy corresponding to the matched call scenario mode;
wherein the time information comprises a time type and a time period during which the event occurs, and the processor (52) is configured to execute the step of acquiring the event type corresponding to the time information by executing the steps of:
in a case where the time period contains a plurality of events, sequencing priorities of the plurality of events according to the time type; and
selecting an event type of an event having a highest priority as the event type corresponding to the time information.

6. The application server of claim 5, wherein the calendar information is located in a mailbox and the processor (52) is configured to execute the call scenario mode adjustment program to perform the steps of:
sending a calendar information acquisition request to a server of the mailbox according to a legal account of the user; and
after receiving the calendar information fed back by the server of the mailbox, updating a locally stored calendar information according to the fed-back calendar information.

7. The application server of claim 6, wherein the processor (52) is further configured to execute the call scenario mode adjustment program to perform the steps of:
before sending the calendar information acquisition request to the server of the mailbox according to the legal account of the user,
requesting format information for acquiring service to the server of the mailbox; and
after receiving the format information fed back by the server of the mailbox, sending the calendar information acquisition request to the server of the mailbox based on the format information.

8. The application server of claim 5, wherein the processor (52) is configured to execute the call scenario mode adjustment program to perform the steps of:
in a case where the call is an outgoing call, carrying out the call based on a number display strategy corresponding to the matched call scenario mode; and
in a case where the call is an incoming call, carrying out the call based on a ringing strategy corresponding to the matched call scenario mode.

9. A computer readable storage medium storing a call scenario mode adjustment program thereon which, when executed by a processor, cases the processor to implement the method according to any one of claims 1 to 4.

## Patentansprüche

1. Verfahren zur Einstellung eines Anrufszenario-Modus, umfassend:
Synchronisieren (101) von benutzerkonfigurierten Kalenderinformationen, wobei die Kalenderinformationen einen Ereignistyp und Zeitinformationen des Ereignisauftretens umfassen;
Erfassen (102) des Ereignistyps, der der Zeitinformation entspricht, als Reaktion auf einen benutzerbezogenen Anruf, der innerhalb einer durch die Zeitinformation festgelegten Zeit auftritt; und
Zuordnen (103) eines entsprechenden Anrufszenario-Modus gemäß dem erfassten Ereignistyp und Verarbeiten des Anrufs auf der Grundlage einer voreingestellten Strategie, die dem zugeordneten Anrufszenario-Modus entspricht;
wobei die Zeitinformation einen Zeittyp und eine Zeitperiode umfasst, während der das Ereignis auftritt, und das Erfassen des Ereignistyps entsprechend der Zeitinformation umfasst:
in einem Fall, in dem die Zeitperiode eine Vielzahl von Ereignissen enthält, Sequenzierung von Prioritäten der Vielzahl von Ereignissen gemäß dem Zeittyp; und
Auswählen eines Ereignistyps eines Ereignisses mit der höchsten Priorität als der Ereignistyp, der der Zeitinformation entspricht.

2. Verfahren nach Anspruch 1, wobei sich die Kalenderinformationen in einer Mailbox befinden und der Schritt des Synchronisierens (101) der benutzerkonfigurierten Kalenderinformationen umfasst:
Senden einer Kalenderinformationserfassungsanforderung an einen Server der Mailbox gemäß einem rechtlichen Konto des Benutzers; und
nach dem Empfangen der von dem Server der Mailbox zurückgesendeten Kalenderinformation, Aktualisieren einer lokal gespeicherten Kalenderinformation gemäß der zurückgesendeten Kalenderinformation.

3. Verfahren nach Anspruch 2, wobei das Verfahren vor dem Schritt des Sendens der Kalenderinformationserfassungsanforderung an den Server der Mailbox gemäß dem legalen Konto des Benutzers ferner umfasst:
Anfordern von Formatinformationen für den Erwerb des Dienstes an den Server der Mailbox;
und
nach dem Empfangen der Formatinformationen, die von dem Server der Mailbox zurückgesendet werden, das Senden der Kalenderinformationserfassungsanforderung an den Server der Mailbox auf der Grundlage der Formatinformationen.

4. Verfahren nach Anspruch 1, wobei der Schritt des Verarbeitens des Anrufs auf der Grundlage der voreingestellten Strategie, die dem Modus des zugeordneten Anrufszenarios entspricht, Folgendes umfasst:
in einem Fall, in dem der Anruf ein ausgehender Anruf ist, Ausführen des Anrufs auf der Grundlage einer Nummernanzeige-Strategie, die dem zugeordneten Anrufszenario-Modus entspricht; und
in einem Fall, in dem der Anruf ein ankommender Anruf ist, das Ausführen des Anrufs auf der Grundlage einer Klingelstrategie, die dem zugeordneten Anrufszenario-Modus entspricht.

5. Anwendungsserver, umfassend einen Speicher (51) und einen Prozessor (52), wobei der Speicher (51) ein computerausführbares Anrufszenario-Modus-Anpassungsprogramm speichert und der Prozessor (52) so konfiguriert ist, dass er das Anrufszenario-Modus-Anpassungsprogramm ausführt, um die Schritte auszuführen:
Synchronisieren von benutzerkonfigurierten Kalenderinformationen, wobei die Kalenderinformationen einen Ereignistyp und Zeitinformationen des Auftretens des Ereignisses umfassen;
Erfassen des Ereignistyps, der der Zeitinformation entspricht, als Reaktion auf einen benutzerbezogenen Anruf, der innerhalb einer durch die Zeitinformation festgelegten Zeit auftritt; und
Erfassen des Ereignistyps, der den Zeitinformationen entspricht; und
Zuordnen eines entsprechenden Anrufszenario-Modus gemäß dem erfassten Ereignistyp und Verarbeiten des Anrufs auf der Grundlage einer voreingestellten Strategie, die dem zugeordneten Anrufszenario-Modus entspricht;
wobei die Zeitinformation einen Zeittyp und eine Zeitperiode umfasst, während der das Ereignis auftritt, und der Prozessor (52) so konfiguriert ist, dass er den Schritt des Erfassens des Ereignistyps entsprechend der Zeitinformation durch Ausführen der folgenden Schritte ausführt:
in einem Fall, in dem die Zeitperiode eine Vielzahl von Ereignissen enthält, Sequenzierung von Prioritäten der Vielzahl von Ereignissen gemäß dem Zeittyp; und
Auswählen eines Ereignistyps eines Ereignisses mit der höchsten Priorität als der Ereignistyp, der der Zeitinformation entspricht.

6. Anwendungsserver nach Anspruch 5, wobei sich die Kalenderinformationen in einer Mailbox befinden und der Prozessor (52) so konfiguriert ist, dass er das Programm zur Anpassung des Anrufszenario-Modus ausführt, um die folgenden Schritte auszuführen:
Senden einer Kalenderinformationserfassungsanforderung an einen Server der Mailbox gemäß einem gesetzlichen Konto des Benutzers; und
nach dem Empfangen der von dem Server der Mailbox zurückgesendeten Kalenderinformationen, Aktualisieren einer lokal gespeicherten Kalenderinformation gemäß der zurückgesendeten Kalenderinformation.

7. Anwendungsserver nach Anspruch 6, wobei der Prozessor (52) ferner so konfiguriert ist, dass er das Programm zur Anpassung des Anrufszenario-Modus ausführt, um die folgenden Schritte durchzuführen:
vor dem Senden der Kalenderinformationserfassungsanforderung an den Server der Mailbox gemäß dem gesetzlichen Konto des Benutzers,
Anfordern von Formatinformationen zum Erfassen von Diensten an den Server der Mailbox;
und
nach dem Empfangen der Formatinformationen, die von dem Server der Mailbox zurückgegeben werden, Senden der Kalenderinformationserfassungsanforderung an den Server der Mailbox auf der Grundlage der Formatinformationen.

8. Anwendungsserver nach Anspruch 5, wobei der Prozessor (52) so konfiguriert ist, dass er das Programm zur Anpassung des Anrufszenario-Modus ausführt, um die folgenden Schritte auszuführen:
in einem Fall, in dem der Anruf ein ausgehender Anruf ist, Ausführen des Anrufs basierend auf einer Nummernanzeige-Strategie, die dem zugeordneten Anrufszenario-Modus entspricht; und
in einem Fall, in dem der Anruf ein ankommender Anruf ist, Ausführen des Anrufs auf der Grundlage einer Klingelstrategie, die dem zugeordneten Anrufszenario-Modus entspricht.

9. Computerlesbares Speichermedium, auf dem ein Programm zur Einstellung des Anrufszenario-Modus gespeichert ist, das, wenn es von einem Prozessor ausgeführt wird, den Prozessor veranlasst, das Verfahren nach einem der Ansprüche 1 bis 4 durchzuführen.

## Revendications

1. Procédé d'ajustement du mode de scénario d'appel, comprenant :
synchroniser (101) des informations de calendrier configurées par l'utilisateur, dans lequel les informations de calendrier comprennent un type d'événement et des informations de temps d'occurrence d'événement ;
en réponse à un appel lié à l'utilisateur se produisant dans un temps défini par l'information de temps, acquérir (102) le type d'événement correspondant à l'information de temps ; et
mettre en correspondance (103) un mode de scénario d'appel correspondant selon le type d'événement acquis, et traiter l'appel sur la base d'une stratégie prédéfinie correspondant au mode de scénario d'appel mis en correspondance ;
dans lequel l'information temporelle comprend un type de temps et une période de temps pendant laquelle l'événement se produit, et acquérir le type d'événement correspondant à l'information temporelle comprend :
dans un cas où la période de temps contient une pluralité d'événements, le séquençage des priorités de la pluralité d'événements selon le type de temps ; et
sélectionner un type d'événement d'un événement ayant une priorité la plus élevée comme type d'événement correspondant à l'information temporelle.

2. Procédé de la revendication 1, dans lequel les informations de calendrier sont situées dans une boîte aux lettres et l'étape de synchronisation (101) des informations de calendrier configurées par l'utilisateur comprend :
transmettre une demande d'acquisition d'informations de calendrier à un serveur de la boîte aux lettres en fonction d'un compte légal de l'utilisateur ; et
après avoir reçu les informations de calendrier renvoyées par le serveur de la boîte aux lettres, la mise à jour des informations de calendrier stockées localement en fonction des informations de calendrier renvoyées.

3. Procédé de la revendication 2, dans lequel, avant l'étape de transmettre la demande d'acquisition d'informations de calendrier au serveur de la boîte aux lettres selon le compte légal de l'utilisateur, le procédé comprend en outre :
demander des informations de format pour le service d'acquisition au serveur de la boîte aux lettres ;
et après réception des informations de format renvoyées par le serveur de la boîte aux lettres, transmettre la demande d'acquisition d'informations de calendrier au serveur de la boîte aux lettres sur la base des informations de format.

4. Procédé de la revendication 1, dans lequel l'étape de traitement de l'appel sur la base de la stratégie prédéfinie correspondant au mode de scénario d'appel mis en correspondance comprend :
dans un cas où l'appel est un appel sortant, exécuter l'appel sur la base d'une stratégie d'affichage de numéro correspondant au mode de scénario d'appel mis en correspondance ; et
dans un cas où l'appel est un appel entrant, exécuter l'appel sur la base d'une stratégie de sonnerie correspondant au mode de scénario d'appel mis en correspondance.

5. Serveur d'application, comprenant une mémoire (51) et un processeur (52), dans lequel la mémoire (51) stocke un programme d'ajustement de mode de scénario d'appel exécutable par ordinateur, et le processeur (52) est configuré pour exécuter le programme d'ajustement de mode de scénario d'appel afin d'exécuter les étapes consistant à :
synchroniser des informations de calendrier configurées par l'utilisateur, dans lequel les informations de calendrier comprennent un type d'événement et des informations de temps d'occurrence d'événement ;
en réponse à un appel lié à l'utilisateur se produisant dans un temps défini par les informations de temps, acquérir le type d'événement correspondant aux informations de temps ; et
mettre en correspondance un mode de scénario d'appel correspondant selon le type d'événement acquis, et traiter l'appel sur la base d'une stratégie prédéfinie correspondant au mode de scénario d'appel correspondant ;
dans lequel les informations de temps comprennent un type de temps et une période de temps pendant laquelle l'événement se produit, et le processeur (52) est configuré pour exécuter l'étape d'acquisition du type d'événement correspondant aux informations de temps en exécutant les étapes consistant :
à dans un cas où la période de temps contient une pluralité d'événements, séquencer les priorités de la pluralité d'événements selon le type de temps ; et
sélectionner un type d'événement d'un événement ayant une priorité la plus élevée comme type d'événement correspondant aux informations de temps.

6. Serveur d'application selon la revendication 5, dans lequel les informations de calendrier sont situées dans une boîte aux lettres et le processeur (52) est configuré pour exécuter le programme d'ajustement de mode de scénario d'appel pour réaliser les étapes consistant à :
transmettre une demande d'acquisition d'informations de calendrier à un serveur de la boîte aux lettres selon un compte légal de l'utilisateur ; et
après avoir reçu les informations de calendrier renvoyées par le serveur de la boîte aux lettres, mettre en oeuvre des informations de calendrier stockées localement selon les informations de calendrier renvoyées.

7. Serveur d'application de la revendication 6, dans lequel le processeur (52) est en outre configuré pour exécuter le programme d'ajustement du mode de scénario d'appel pour effectuer les étapes consistant à :
avant transmettre la demande d'acquisition d'informations de calendrier au serveur de la boîte aux lettres selon le compte légal de l'utilisateur,
demander des informations de format pour acquérir le service au serveur de la boîte aux lettres ; et
après avoir reçu les informations de format renvoyées par le serveur de la boîte aux lettres, transmettre la demande d'acquisition d'informations de calendrier au serveur de la boîte aux lettres sur la base des informations de format.

8. Serveur d'application de la revendication 5, dans lequel le processeur (52) est configuré pour exécuter le programme d'ajustement de mode de scénario d'appel pour réaliser les étapes consistant à :
dans un cas où l'appel est un appel sortant, effectuer l'appel sur la base d'une stratégie d'affichage de numéro correspondant au mode de scénario d'appel mis en correspondance ; et
dans un cas où l'appel est un appel entrant, effectuer l'appel sur la base d'une stratégie de sonnerie correspondant au mode de scénario d'appel mis en correspondance.

9. Support de stockage lisible par ordinateur stockant un programme d'ajustement de mode de scénario d'appel qui, lorsqu'il est exécuté par un processeur, permet au processeur de mettre en oeuvre le procédé selon l'une quelconque des revendications 1 à 4.
